# EUROPÄISCHE PATENTSCHRIFT

(11) **EP 2 558 183 B1**
(45) Veröffentlichungstag und Bekanntmachung des Hinweises auf die Patenterteilung: **30.04.2014**
(21) Anmeldenummer: 11708982.1
(22) Anmeldetag: 15.02.2011
(51) Int. Cl.: B01D 33/04

(54) **VAKUUMBANDFILTER**
VACUUM BELT FILTER
FILTRE À BANDE SOUS VIDE

(30) Priorität: 10.04.2010 DE 102010014485
(43) Veröffentlichungstag der Anmeldung: 20.02.2013
(73) Patentinhaber: DIM - Dessauer Instandhaltung und Montage GmbH, 06847 Dessau-Rosslau (DE); Mechanical Engineering Department Höink, 45659 Recklinghausen (DE)
(72) Erfinder: HÖINK, Wolfgang, 45659 Recklinghausen (DE)
(74) Vertreter: Tragsdorf, Bodo
(86) Internationale Anmeldenummer: PCT/EP2011/000697
(87) Internationale Veröffentlichungsnummer: WO 2011/124293

(56) Entgegenhaltungen:
- DE-A1- 3 044 733
- DE-U1- 9 106 605
- US-A- 2 377 252

## Beschreibung

Die Erfindung bezieht sich auf einen Vakuumbandfilter mit einem horizontal oder schräg angeordneten, umlaufenden Band mit Ablauföffnungen, auf dessen Oberseite sich ein umlaufendes Filtertuch befindet, wobei das Obertrum des Bandes über eine mittig angeordnete Vakuumkammer läuft, durch die die Abtrennung des Filtrates vom auf das Band aufgegebenen Filtergutes unterstützt wird.

Bandfilter sind bereits seit langem bekannt und werden in verschiedenen Industriezweigen insbesondere zur Entwässerung von als Suspensionen anfallenden Zwischen- oder Endprodukten eingesetzt.

Aus der DE 91 06 605 U ist ein Vakuumbandfilter für Kristallisationsprodukte enthaltende Suspensionen bekannt. Der Vakuumbandfilter besitzt ein über Umlenkrollen geführtes umlaufendes Band mit einem auf diesem aufliegenden Filtertuch zur Aufnahme sowie zum Transport der Suspension bzw. des Filterkuchens. Das Band ist in seinem mittleren Bereich mit einer Vielzahl von Ablauföffnungen, in Längsrichtung des Bandes gesehen, versehen. Unterhalb des Bandes befindet sich eine über die Länge zwischen den Umlenkrollen angeordnete Vakuumkammer, die gegenüber dem Band abgedichtet ist.

Zur Abdichtung sind in Ausnehmungen der Vakuumkammer angeordnete Schleißleisten vorgesehen, die mit dem Band umlaufen. Als Dichtflüssigkeit wird Wasser verwendet, das über Zufuhrleitungen und vertikale Kanäle in den Bereich unterhalb der Schleißleisten gelangt.

Eine ähnliche Lösung ist auch aus der DE 41 27 132 C2 bekannt, wobei die Vakuumkammer gegenüber dem Band durch ein sich in Längsrichtung des Bandes erstreckendes Dichtelement abgedichtet ist. Das Dichtelement ist mit Nuten versehen, in denen Schleißleisten gehalten sind, die zur Verringerung der Reibung mit Dichtwasser beaufschlagt werden. Das Dichtelement besitzt zusätzlich noch Auffangnuten, die neben den Schleißleisten angeordnet sind, um zu verhindern, dass Wasser in das Filtrat gelangen kann. Unterhalb des Dichtelementes ist noch eine Labyrinth-Dichtung vorgesehen.

In der Praxis ist der Einsatz derartiger Vakuumbandfilter mit Dichtwasserschmierung weit verbreitet. Je nach Baugröße beträgt der Wasserverbrauch ca. 0,5 bis 10m³/h.

Eine Dichtwasserschmierung verursacht einerseits hohe Betriebskosten durch Bereitstellung und Wiederaufbereitung des Wassers und andererseits besteht die Gefahr, dass Dichtwasser in das Filtrat gelangen kann, was in einer Vielzahl an Anwendungsfällen unerwünscht ist.

Außerdem führt der Einsatz von Dichtwasser zu einer erhöhten Korrosionsgefahr an aus Metall bestehenden Bauteilen der Bandflteranlage.

Der Erfindung liegt die Aufgabe zugrunde, einen Vakuumbandfilter zu schaffen, der sich durch eine verbesserte Abdichtung zwischen dem Band bzw. Fördergurt und der Vakuumkammer auszeichnet und bei dem auf den Einsatz einer Dichtflüssigkeit verzichtet werden kann.

Erfindungsgemäß wird die Aufgabe durch die im Anspruch 1 angegebenen Merkmale gelöst. Vorteilhafte Ausgestaltungen und Weiterbildungen sind Gegenstand der Ansprüche 2 bis 9.

Im oberen Abschnitt der Vakuumkammer sind unmittelbar neben der zentralen Ablauföffnung in Längsrichtung verlaufende identische Ausnehmungen angeordnet. Die Ausnehmungen weisen an ihren Längsseiten stufenförmige Absätze mit seitlichen Begrenzungen auf. Dadurch entstehen ein oberer und ein unterer Freiraum. Der endlose, über Umlenkrollen geführte Schleißgurt wird im oberen Freiraum geführt und liegt luftdicht auf der Oberseite der Stufen auf. In dem unteren Freiraum, der sich unterhalb des Schleißgurtes befindet, sind stabile Gleitelemente gelagert, die mit dem Schleißgurt in Berührungskontakt stehen. Im Betriebszustand liegt der Schleißgurt sowohl auf den Oberseiten der Stufen der Ausnehmung als auch auf den Gleitelementen auf. Die Breite des Schleißgurtes und die Breite zwischen den seitlichen Begrenzungen des oberen Freiraumes sind so bemessen, dass der Schleißgurt im Betriebszustand ständig auf den Oberseiten der Stufen aufliegt.

Die stabilen Gleitelemente sind vorzugsweise als Rollen, Rollenkette, Buchsen oder Kugeln ausgeführt. Eine Rollenkette kann beispielsweise in Führungsnuten laufen, die in den Wandabschnitten, die den unteren Freiraum begrenzen, eingefräst sind. Die Rollenketten können aus einem geeigneten Kunststoff oder aus Edelstahl gefertigt sein. Über mit der Rollenkette verbundene Mitnehmer aus Kunststoff wird der umlaufende Schleißgurt teilweise abgestützt. Die beiden parallel zueinander angeordneten Schleißgurte werden von dem angetriebenen Filtergurt durch eine luftdichte Kraftschlussverbindung mit bewegt. Der ca. 10 mm dicke Schleißgurt besteht aus einem Verbundmaterial mit einer Deckschicht auf Basis Styrol-Butadien-Kautschuk und Gewebeeinlagen auf Basis Polyester/Polyamid. Die Unterseite des Schleißgurtes, die die Laufseite bildet, ist mit einer Gleitschicht versehen.

Die vorgeschlagene Lösung ermöglicht einen "trockenen Betrieb" von Vakuumbandfiltern. Dies ist wirtschaftlich von großer Bedeutung. Der Einsatz von Frischwasser zur Abdichtung und Schmierung ist mit einem erheblichen Betriebskostenaufwand verbunden. Zusätzlich ist der Verschleiß durch Korrosion so hoch, dass in der Regel nach einer Betriebsdauer von ca. 10 Jahren alle aus Stahl bestehenden Bauteile des Vakuumbandfilters ausgetauscht werden müssen.

Im Vergleich dazu sind die zusätzlichen Aufwendungen für eine "trockene Betriebsweise" gering.

Bei einem Einsatz von Rollen als stabile Gleitelemente sind die Rollen drehbeweglich auf Stiften gelagert, die quer zur Bewegungsrichtung des Schleißgurtes in definierten Abständen, beispielsweise 20 mm, angeordnet sind. In die den unteren Freiraum begrenzenden Wandabschnitte werden Bohrungen gesetzt und die Stifte mit den Rollen montiert. Vorzugsweise sind auf einem Stift mehrere Rollen, z.B. drei, drehbeweglich gelagert.

Die Vakuumkammer kann außer aus Kunststoff auch aus einem anderen geeigneten Material, wie z.B. Metall, hergestellt werden.

Bei einer Ausführung aus Kunststoff kann diese als einteilige kompakte Baueinheit ausgeführt werden. Bevorzugt erfolgt die Herstellung aus PE-UHMW (ultrahochmolekular), durch spanabhebende Bearbeitung eines vorgefertigten Rohlings.

Die Oberseiten der Stufen, die seitlichen Auflagen für den Schleißgurt, sollten aus einem Material mit einem sehr niedrigen Reibungskoeffizienten bestehen oder mit einem derartigen Material beschichtet sein.

Vakuumkammer und/oder Filtergurtsystem können in ihrer Höhe verstellbar angeordnet sein. Dadurch wird bei Bedarf eine schnelle und gute Zugänglichkeit zu den Rollen gewährleistet.

Die Erfindung soll nachstehend an einem Ausführungsbeispiel näher erläutert werden. In der zugehörigen Zeichnung zeigen:
- Fig. 1: einen Teil eines erfindungsgemäßen Vakuumbandfilters in perspektivischer Darstellung, als geschnittene Vorderansicht,
- Fig. 2: die Einzelheit "X" in Fig. 1 in vergrößerter Darstellung als Teilquerschnitt,
- Fig. 3: die Vakuumkammer mit Gurten als vergrößerte Querschnittsdarstellung,
- Fig. 4: die Vakuumkammer mit Rollen als Einzelteil, in perspektivischer Darstellung, und
- Fig. 5: eine zweite Ausführung der Vakuumkammer als Querschnittsdarstellung.

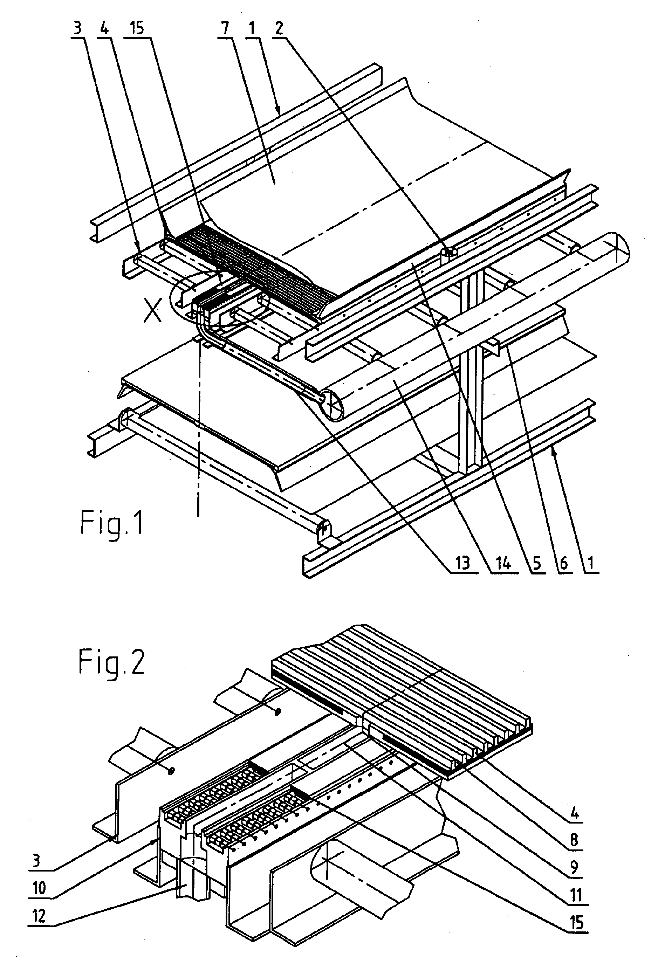

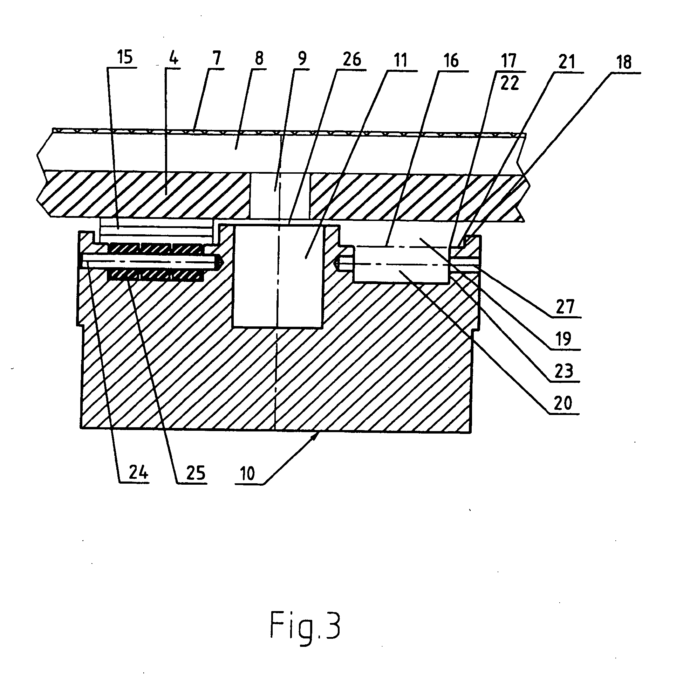

Der in Figur 1 gezeigte Vakuumbandfilter besteht aus einem Rahmengestell 1 mit einem Gurttragsystem 3. Der umlaufende Filtergurt 4 mit Obertrum 5 und Untertrum 6 wird von Führungsroffen 2 geführt. Auf dem Filtergurt 4 liegt ein Filtertuch 7 auf. Die Auflagefläche des Filtergurtes 4 besitzt Querrillen 8 und entlang der Mittellinie x angeordnete Ablauföffnungen 9. Unterhalb des Obertrums 5 ist entlang der Länge zwischen den beiden Umlenkrollen des Fördergurtes 4 eine Vakuumkammer 10 angeordnet. Die Vakuumkammer 10 besitzt mittig eine sich über die gesamte Länge erstreckende Kammer bzw. Öffnung 11, die sich unterhalb der Ablauföffnungen 9 des Filtergurtes 4 befindet. An die Öffnung 11 schließen sich Filtratablaufstutzen 12 an, die mit Filtratschläuchen 13 verbunden sind, die an ein seitlich angeordnetes Sammelrohr 14 angeschlossen sind. Das Sammelrohr 14 steht mit einer nicht näher gezeigten Evakuierungseinheit zur Erzeugung eines Vakuums in Verbindung. Durch das angelegte Vakuum wird beispielweise aus einer auf das Filtertuch 7 aufgegebenen Suspension als Filtrat Wasser abgezogen, das über die Filtratschläuche 13 in das Filtratsammelrohr 14 und den Filtratabscheider abfließt. Zur Aufrechterhaltung des Vakuums ist es erforderlich, dass während des Weitertransportes des Filtergurtes zwischen der Unterseite des Filtergurtes 4 und der Vakuumkammer 10 absolute Dichtheit herrscht. Hierzu sind in Längsrichtung zu beiden Seiten der zentralen Öffnung 11 der Vakuumkammer 10 über Umlenk- und Führungsrollen gespannte Endlos-Schleißgurte 15 angeordnet, wie in den Figuren 2 und 3 zu sehen. Aus Übersichtlichkeitsgründen wurden in der Figur 3, auf der rechten Seite, Schleißgurt, Stift und Rollen nicht mit dargestellt. Die Ausführung ist ansonsten analog wie auf der linken Seite gezeigt. Die relativ dicken Schleißgurte 15 (ca. 10 mm dick) sind ca. 40 mm breit und bestehen aus einer Deckschicht (ca. 2,5 mm dick) und mehreren Gewebeeinlagen, wobei die Unterseite mit einer Gleitlage ausgerüstet ist. Die Deckschicht besteht aus vernetztem NR/SBR (Natur/Styrol-Butadien-Kautschuk) und die Einlage mit Gleitlage aus EP Polyester/Polyamid.

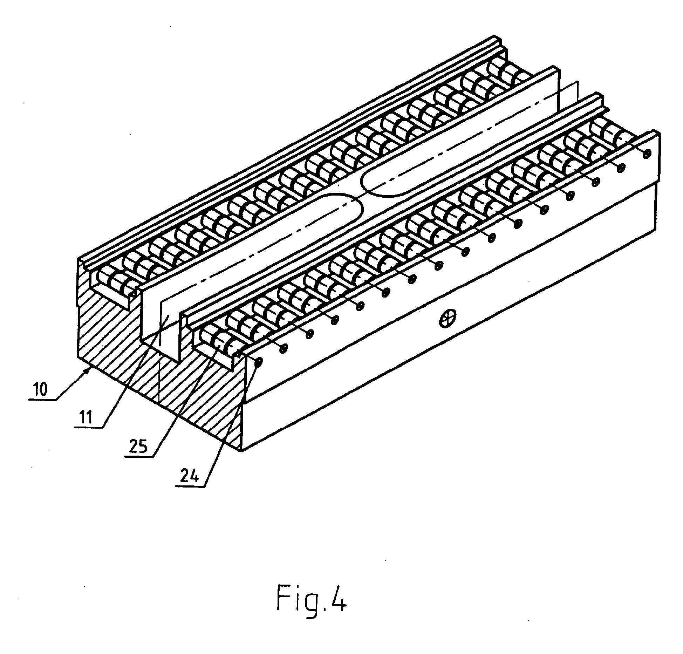

Die Bewegung der Schleißgurte 15 erfolgt durch einen Kraftschluss zwischen der Unterseite des angetriebenen Filtergurtes 4 und der Oberseite des Schleißgurtes 15. Im gezeigten Beispiel (Fig. 4) ist die Vakuumkammer 10 als kompaktes Bauteil ausgeführt und besteht aus einer speziellen Zusammensetzung auf Basis HDPE (Polyethylen hohe Dichte). Im oberen Abschnitt der Vakuumkammer 10 sind parallel, unmittelbar neben der zentralen Öffnung 11 Ausnehmungen 16 eingearbeitet, die an ihren beiden Längsseiten stufenförmige Absätze 17 mit seitlichen Begrenzungen 18 aufweisen. Durch die stufenförmigen Absätze 17 in der Ausnehmung 16 werden somit ein oberer Freiraum 19 und ein unterer Freiraum 20 gebildet. Die Oberseite 21 der Stufen 22 bildet die untere Begrenzung des oberen Freiraumes 19.

In die vertikalen Wandabschnitte 23, die den unteren Freiraum 20 begrenzen sind in gleicher Höhe und in gleichen Abständen Bohrungen 27 zur Aufnahme von Stiften 24 eingebracht. Auf jedem Stift 24 sind eine oder mehrere Rollen 25 aus POM (Polyoxymethylen) drehbar gelagert. Die einzelnen Rollen 25 sind identisch ausgeführt und so angeordnet, dass deren oberste Mantellinie geringfügig unterhalb der Oberseite 21 der Stufen 22 liegt. Die Rollen 25, die einen besonders niedrigen Reibungskoeffizienten besitzen, dienen als Abstützung und Gleitführung für den Schleißgurt 15, der zusätzlich luftdicht mit seinen randseitigen Abschnitten auf der Oberseite 21 der Stufen 22 aufliegt. Die relativ geringe Auflagefläche des Schleißgurtes 15 auf der Oberseite 21 der Stufen 22 in Kombination mit der Rollenführung gewährleistet eine ausreichend hohe Abdichtung des sich unmittelbar anschließenden, unter Vakuum stehenden Saugraumes 26. Diese Vakuumabdichtung des Filtersystems ist im laufenden Betriebszustand für Differenzdrücke bis zu 800 mbar geeignet.

Vakuumkammer 10 mit Rollen 15 sowie Schleißgurt 15 und/oder Filtergurt 4 können als separate Baueinheiten in ihrer Höhe verstellbar ausgeführt sein. Dadurch wird im Bedarfsfall eine gute Zugänglichkeit zu der Abdichteinheit mit den Rollen 25 gewährleistet.

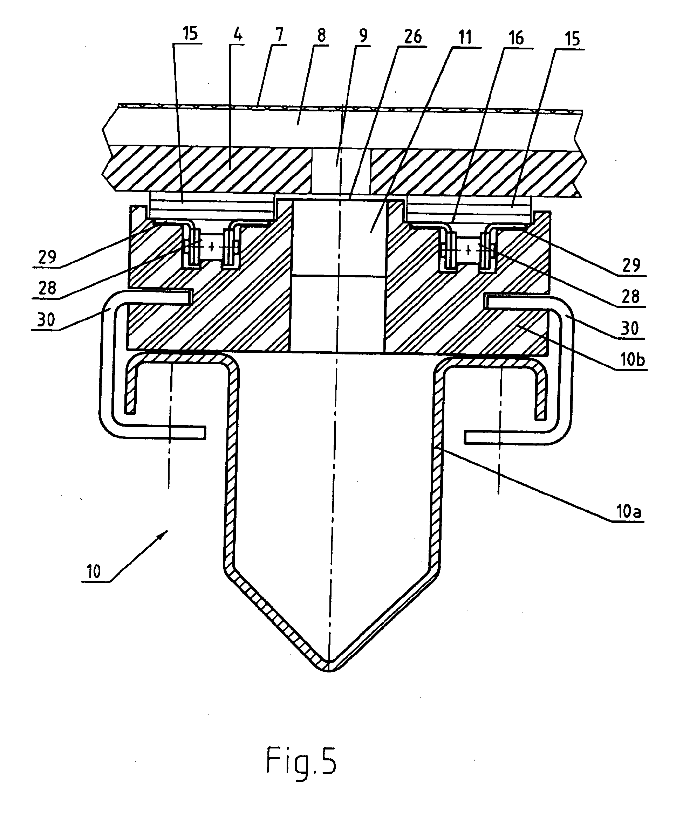

Die in Figur 5 gezeigte Ausführung unterscheidet sich insbesondere von der vorstehend beschriebenen Ausführung durch die Anordnung einer Rollenkette 28 mit Mitnehmerelementen 29 anstelle von Rollen. Die Rollenkette 28 ist in seitlichen Führungsnuten gelagert. Der Schleißgurt 15 wird von den Mitnehmern 29 abgestützt. Die Abdichtung des Saugraumes 26 erfolgt analog wie zu Fig. 3 beschrieben. Die Vakuumkammer 10 besteht aus einem oberen Kunststoffblock 10a und einem an diesem mittels Klammern 30 befestigtem Edelstahlgehäuse 10b. Der Kunststoffblock 10a besitzt in analoger Weise Ausnehmungen 16 und Ablauföffnungen 11 wie die in den Figuren 1 bis 4 gezeigte Vakuumkammer.

## Patentansprüche

1. Vakuumbandfilter mit einem horizontal oder geneigt angeordneten, umlaufenden Filtergurt mit Ablauföffnungen, auf dessen Oberseite sich ein umlaufendes Filtertuch befindet, wobei unter dem Obertrum des Filtergurtes eine Vakuumkammer angeordnet ist, die an ihren beiden Längsseiten jeweils mittels eines mit dem Filtergurt umlaufenden Schleißgurtes abgedichtet ist, wobei der Schleißgurt in im oberen Abschnitt der Vakuumkammer angeordneten Ausnehmungen geführt ist, **dadurch gekennzeichnet, dass** die Ausnehmungen (16) an ihren Längsseiten stufenförmige Absätze (17) mit seitlichen Begrenzungen (18) aufweisen, wodurch ein oberer Freiraum (19) und ein unterer Freiraum (20) gebildet sind, der Schleißgurt (15) luftdicht auf der Oberseite (21) der Stufen (22) aufliegt und in dem unteren Freiraum (20) unterhalb des Schleißgurtes (15) stabile Gleitelemente (25, 28, 29) gelagert sind, die mit dem Schleißgurt (15) in Berührungskontakt stehen, wobei die Breite des Schleißgurtes (15) und die Breite zwischen den seitlichen Begrenzungen (18) des oberen Freiraumes (19) so bemessen ist, dass der Schleißgurt (15) im Betriebszustand ständig auf der Oberseite (21) der Stufen (22) aufliegt.

2. Vakuumbandfilter nach Anspruch 1, **dadurch gekennzeichnet, dass** die Gleitelemente als Rollen (25), Rollenkette (28) mit Mitnehmern (29), Buchsen oder Kugeln ausgeführt sind.

3. Vakuumbandfilter nach Anspruch 2, **dadurch gekennzeichnet, dass** die Rollen (25) drehbeweglich auf Stiften (24) gelagert sind, die quer zur Bewegungsrichtung des Schleißgurtes (15) in definierten Abständen angeordnet sind.

4. Vakuumbandfilter nach einem der Ansprüche 2 oder 3, **dadurch gekennzeichnet, dass** auf einem Stift (24) mehrere Rollen (25) gelagert sind.

5. Vakuumbandfilter nach einem der Ansprüche 1 bis 4, **dadurch gekennzeichnet, dass** die Oberseiten (21) der Stufen (22) aus einem Material mit einem sehr niedrigen Reibungskoeffizienten bestehen oder mit einem derartigen Material beschichtet sind.

6. Vakuumbandfilter nach einem der Ansprüche 1 bis 5, **dadurch gekennzeichnet, dass** der Schleißgurt (15) aus einer Deckschicht auf Basis Styrol-Butadien-Kautschuk und Gewebeeinlagen auf Basis Polyester/Polyamid besteht, wobei die die Laufseite bildende Unterseite mit einer Gleitschicht versehen ist.

7. Vakuumbandfilter nach einem der Ansprüche 1 bis 6, **dadurch gekennzeichnet, dass** Vakuumkammer (15) und/oder Gurttragsystem (3, 4) in ihrer Höhe verstellbar angeordnet sind.

8. Vakuumbandfilter nach einem der Ansprüche 1 bis 7, dadurch gekenntzeichnet, dass die Vakuumkammer (10) als einteilige kompakte Baueinheit ausgebildet ist.

9. Vakuumbandfilter nach einem der Ansprüche 1 bis 8, **dadurch gekennzeichnet, dass** die Vakuumkammer (10) aus Polyethylen hoher Dichte besteht und durch spanabhebende Bearbeitung aus einem vorgefertigten Rohling hergestellt ist.

## Claims

1. Vacuum belt filter comprising a revolving filter belt with drain openings which is arranged horizontally or obliquely and has a revolving filter cloth on its upper face, wherein a vacuum chamber is arranged below the carrying run of the filter belt and is sealed at each of its two longitudinal sides by means of a wear belt revolving with the filter belt, wherein the wear belt is guided in recesses arranged in the upper section of the vacuum chamber, **characterised in that** the recesses (16) have step-shaped ledges (17) with lateral boundaries (18) on their longitudinal sides, whereby an upper free space (19) and a lower free space (20) are formed, the wear belt (15) rests in an air-tight manner on the upper face (21) of the steps (22) and stable sliding elements (25, 28, 29) are mounted in the lower free space (20) below the wear belt (15) and are in contact with the wear belt (15), wherein the width of the wear belt (15) and the width between the lateral boundaries (18) of the upper free space (19) are dimensioned such that the wear belt (15) in the operating state rests continuously on the upper face (21) of the steps (22).

2. Vacuum belt filter according to claim 1, **characterised in that** the sliding elements are constructed as rollers (25), roller chain (28) with carriers (29), bushings or balls.

3. Vacuum belt filter according to claim 2, **characterised in that** the rollers (25) are mounted so as to be rotatable on pins (24) which are arranged at defined distances transversely to the direction of movement of the wear belt (15).

4. Vacuum belt filter according to one of the claims 2 or 3, **characterised in that** a plurality of rollers (25) are mounted on one pin (24).

5. Vacuum belt filter according to one of the claims 1 to 4, **characterised in that** the upper faces (21) of the steps (22) comprise a material with a very low coefficient of friction, or are coated with such a material.

6. Vacuum belt filter according to one of the claims 1 to 5, **characterised in that** the wear belt (15) comprises a covering layer based on styrene-butadiene rubber and fabric inserts based on polyester/polyamide, wherein the underside forming the backing side is provided with a sliding layer.

7. Vacuum belt filter according to one of the claims 1 to 6, **characterised in that** vacuum chamber (15) and/or belt carrying system (3, 4) are arranged so as to be adjustable in height.

8. Vacuum belt filter according to one of the claims 1 to 7, **characterised in that** the vacuum chamber (10) is formed as a one-piece compact component.

9. Vacuum belt filter according to one of the claims 1 to 8, **characterised in that** the vacuum chamber (10) is made of high density polyethylene and manufactured by machining a prefabricated blank.

## Revendications

1. Filtre à bande sous vide muni d'une courroie filtrante continue, disposée horizontalement ou de manière inclinée et munie d'orifices de décharge, dont la surface supérieure présente une toile filtrante continue, une caisse à vide, étanche sur chacun de ses deux côtés longitudinaux grâce à une courroie résistante à l'usure en rotation avec la courroie filtrante, se trouvant sous le brin supérieur de la courroie filtrante, la courroie résistante à l'usure étant guidée dans des logements disposés dans la section supérieure de la caisse à vide, **caractérisé en ce que** les logements (16) présentent, sur leurs côtés longitudinaux, des paliers (17) en forme de marche munis de butées de limitation latérales (18), ce qui forme un dégagement supérieur (19) et un dégagement inférieur (20), la courroie résistante à l'usure (15) reposant sur la face supérieure (21) des marches (22) en étant étanche à l'air, et des éléments de glisse (25, 28, 29) stables qui touchent la courroie résistante à l'usure (15) sont logés dans l'espace libre inférieur (20) en dessous de la courroie résistante à l'usure (15), la largeur de la courroie résistante à l'usure (15) et la largeur entre les butées de limitation latérales (18) de l'espace libre supérieur (19) étant dimensionnées de sorte que la courroie résistante à l'usure (15) repose constamment, lors de son fonctionnement, sur la face supérieure (21) des marches (22).

2. Filtre à bande sous vide selon la revendication 1, **caractérisé en ce que** les éléments de glisse sont réalisés sous forme de rouleaux (25), chaîne à rouleaux (28) avec tocs d'entraînement (29), coussinets ou billes.

3. Filtre à bande sous vide selon la revendication 2, **caractérisé en ce que** les rouleaux (25) sont logés de manière à pouvoir tourner sur des broches (24) qui sont disposées diagonalement par rapport au sens de déplacement de la courroie résistante à l'usure (15) à des écarts définis.

4. Filtre à bande sous vide selon l'une quelconque des revendications 2 ou 3, **caractérisé en ce que** plusieurs rouleaux (25) sont logés sur une broche (24).

5. Filtre à bande sous vide selon l'une quelconque des revendications 1 à 4, **caractérisé en ce que** les faces supérieures (21) des marches (22) se composent d'un matériau possédant un très faible coefficient de frottement ou sont recouvertes d'un matériau semblable.

6. Filtre à bande sous vide selon l'une quelconque des revendications 1 à 5, **caractérisé en ce que** la courroie résistante à l'usure (15) se compose d'une couche de finition à base de caoutchouc styrène-butadiène et de couches de toile à base de polyester/polyamide, la face inférieure formant la face de roulement étant pourvue d'une couche de glisse.

7. Filtre à bande sous vide selon l'une quelconque des revendications 1 à 6, **caractérisé en ce que** la caisse à vide (15) et/ou le système de support de courroie (3, 4) sont disposés de manière à pouvoir se régler en hauteur.

8. Filtre à bande sous vide selon l'une quelconque des revendications 1 à 7, **caractérisé en ce que** la caisse à vide (10) est réalisée sous forme de module compact en une seule pièce.

9. Filtre à bande sous vide selon l'une quelconque des revendications 1 à 8, **caractérisé en ce que** la caisse à vide (10) se compose de polyéthylène de haute densité et est usinée à partir d'un lopin préfabriqué.
